# EUROPEAN PATENT SPECIFICATION

(11) **EP 3 874 366 B1**
(45) Date of publication and mention of the grant of the patent: **25.12.2024**
(21) Application number: 19795356.5
(22) Date of filing: 24.10.2019
(51) Int. Cl.: G06F 8/76, G06F 8/53, G06F 8/52, G06F 8/41, G06F 8/54, G06F 9/455, G06F 9/445

(54) **SELECTIVE SUBSTITUTION OF LEGACY LOAD MODULE PROGRAMS WITH CLASSES FOR EXECUTION IN A JAVA VIRTUAL MACHINE**
SELEKTIVE SUBSTITUTION VON LEGACY LADEMODULPROGRAMMEN MIT KLASSEN ZUR AUSFÜHRUNG IN EINER VIRTUELLEN JAVA-MASCHINE
SUBSTITUTION SÉLECTIVE DE PROGRAMMES DE MODULES DE CHARGE EXISTANTS PAR DES CLASSES À DES FINS D'EXÉCUTION DANS UNE MACHINE VIRTUELLE JAVA

(30) Priority: 02.11.2018 US 201862755230 P
(43) Date of publication of application: 08.09.2021
(73) Proprietor: LZLabs GmbH, 8304 Wallisellen (CH)
(72) Inventor: JAEGER, Jan, 8803 Rüschlikon (CH)
(74) Representative: Müller-Boré & Partner Patentanwälte PartG mbB
(86) International application number: PCT/IB2019/059149
(87) International publication number: WO 2020/089750

(56) References cited:
- WO-A1-2018/197928
- SCOTT STRICKER: "Tutorial - Java programming with JNI", IBM DEVELOPER TUTORIALS ONLINE, 26 March 2002 (2002-03-26), pages 1 - 21, XP055663343, Retrieved from the Internet <URL:https://developer.ibm.com/technologies/java/tutorials/j-jni/> [retrieved on 20200129]
- WALTER FALBY: "The Java Native Interface on z/OS", ENTREPRISE SYSTEM MEDIA ARTICLES ONLINE, 1 December 2010 (2010-12-01), pages 1 - 4, XP055663762, Retrieved from the Internet <URL:http://enterprisesystemsmedia.com/article/the-java-native-interface-on-z-os> [retrieved on 20200130]
- ANONYMOUS: "IBM Systems Reference Library - IBM OS - Linkage Editor and Loader Program Numbers 360S-ED-510 360S-ED-521 360S-LD-547", IBM DOCUMENTATION, 1 January 1972 (1972-01-01), pages 1 - 250, XP055660866, Retrieved from the Internet <URL:http://bitsavers.informatik.uni-stuttgart.de/pdf/ibm/360/os/R21.0_Mar72/GC28-6538-9_OS_Linkage_Editor_and_Loader_Release_21_Jan72.pdf> [retrieved on 20200122]
- "Technique to get the dependency information between Java EE and CICS COBOL programs in an integrated application server which can run both Java EE and CICS COBOL applications", IP.COM JOURNAL, IP.COM INC., WEST HENRIETTA, NY, US, 7 October 2013 (2013-10-07), XP013159368, ISSN: 1533-0001
- DIDIER DURAND: "The Evolution of Mainframe Transactional Processing Through Containerization and the Cloud", LZLABS WHITEPAPERS, 1 January 2018 (2018-01-01), pages 1 - 6, XP055662451, Retrieved from the Internet <URL:https://cdn2.hubspot.net/hubfs/2158025/2018%20Q1%20Evolution%20of%20Mainframe%20WP/the-evolution-of-mainframe-transactional-processing-through-containerization-white-paper.pdf?__hstc=&__hssc=&hsCtaTracking=af8c89f3-c3dc-4dfa-bb7b-b106288a3f6b]8956a307-e544-4ba1-b11f-b327e2a93539> [retrieved on 20200128]

## Description

### TECHNICAL FIELD

The present invention relates to a method and a system for executing a program compiled for a source architecture on a machine having a different target architecture.

### BACKGROUND

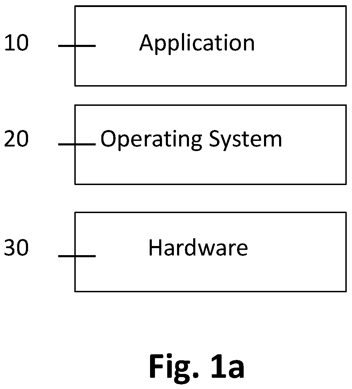

Executable applications (also sometimes called programs) are compiled from source code. A limitation of computer systems is that a given executable application can only run under the operating system and machine instruction set for which it was compiled or assembled. This is true because executable programs target a specific instruction set (i.e. instructions that the system recognizes and can execute), with a known set of registers, and the program's ability to carry out input/output operations is typically with reference to the available calls to a known operating system. For example, as illustrated in **FIG. 1a****,** a compiled application program (10), is configured to execute on a particular legacy platform including a particular legacy operating system (20), and legacy hardware platform (30). Such operating systems (20) and hardware platforms (30) may be of varying degrees of complexity. One might also refer to the platform for which the software is already compiled to operate in as a "legacy" system. A legacy system need not be of any particular age. Rather, legacy refers to the system for which the complied application has been compiled. In order to run the compiled application in a non-legacy system that implements a different set of hardware instructions, or under an operating system with differing function calls, such as a system does not include the legacy operating system, the legacy platform, or both, typically the application program must be recompiled. This restriction limits the ability of the compiled application program to operate in a heterogeneous environment, including a non-legacy system.

Hardware instructions that are natively supported by a particular computer or processor constitute part of the architecture of that computer or processor. Processors or computers of one platform may have a different architecture, and thus allow the native execution of different instructions than processors or computers on another platform. In the mainframe environment, a relocatable load module typically refers to all or part of an executable application, that is compiled to run mainframe computing environment. A compiler, such as the Cobol compiler, translates a source code program made up of one or more source code files into object code including one or more machine language program files. These object code files, in some cases together with additional object files, can be linked and assembled into an executable program.

A load module refers to all or part of an executable computer program, typically prepared for loading into the main memory of a legacy computer platform such as a S/370, S/390, or z/OS mainframe. Typically, a load module comprises object code that was compiled for a legacy platform, may include assembler code targeting the same legacy program, that has been linked by a linkage editor for loading and execution on the legacy platform. Because the object code and/or assembler code in the load module were compiled for the target legacy platform, a legacy load module typically cannot run on a different platform.

One approach to enabling a legacy load module to run on a different platform is emulation. For example, an emulation platform, which may include non- a non-legacy operating system, non-legacy hardware, or both, may be constructed to emulate the legacy operating system and hardware, providing a virtual container that presents the appearance of the legacy environment to the application. A disadvantage of emulation is that it often reduces system performance, and typically does not provide support for legacy memory protection schemes. However, improved system performance can be achieved through the implementation of optimized native application program interfaces (APIs) to replace the emulation of operating system function calls. Protection key memory management can be implemented through the memory management system described in, "Protection Key Management and Prefixing in Virtual Address Space Legacy Emulation System."WO2017/103,651.

In another approach to enable an application to run on different hardware platform, a compiler or cross compiler may be used to recompile the program so that it is expressed using the native hardware instructions of the new, target hardware platform. However, in many situations it is undesirable to recompile the source code. Recompiling may result in errors, changes in system performance, or changes in system behavior. Resolving these issues may require changes to the original source code, which fragments the code base and increases management complexity. Additionally, the source code for a particular application may not always be available, placing further restrictions on the ability to operate a given program on a different platform.

A decompiler is a program that reverses the process of a compiler which translates a computer program written in a high-level, typically human-readable language into a machine language program. In other words, a decompiler takes as input a program written in machine language, and translates that program into an equivalent program written in a higher-level language. A decompiler can be used to create a source code file that may be edited by a programmer and subsequently recompiled, or cross compiled for execution on a platform having a different machine architecture. However, decompilation does not produce source code that is identical to the original source code from which the machine language code or object code was originally generated. In particular, where optimizing compilers have been used to improve executable performance, information is frequently lost which cannot be fully recovered using a decompiler. Additionally, decompiling object code is complicated because it is difficult to separate computer code from data. Nevertheless, decompilation has found applications in algorithm extraction and analysis, in malware detection, and, to a limited degree, for source code recovery for purposes of modifying or translating object code from one environment to another.

A disassembler receives as input an executable program and converts that program into a machine independent assembly code representation. Assembly language typically has a one-to-one correspondence between assembly instructions and underlying machine instructions. A disassembled program can be reassembled by an assembler into an executable program.

In the case of interdependent software programs, translating code from one computer architecture to another typically introduces changes that break interfaces between previously interoperable programs. For example, in the case of call back programs that pass as parameters the addresses of routines or functions to allow a receiving program to invoke a routine in a calling program, translation through decompilation and recompilation to a different target architecture will typically change the addresses, and may change the size of address operands, so as to disrupt the ability of the receiving program to invoke the remote routine. Conversion of data between EBCDIC format typically used in legacy mainframe systems, and ASCII format used with newer platforms A load module compiler that can receive as input, a compiled legacy load module such as a Cobol load module compiled for a System 390 mainframe, and that generate as output an executable program that runs on a 64 bit x86 platform while continuing to make external references accessible has been described in "Load Module Compiler", WO2017/153815.. The load module compiler enables the selective decompliation and recompilation of executable load modules to a new, target native environment, including the provision of mechanism to correctly handle addressing and data formatting changes. However, computer programs that have been migrated to the new computing environment using the load module compiler may not exploit programming features offered by the new programing environment.

In one example of a load module compiler, a load module decompiler is provided that is operable to receive as input, a relocatable load module previously compiled to run on a 32-bit mainframe computer, and to generate as output, an executable program compiled to run on a 64-bit computer. By selecting input executable programs that are not self-modifying and whose data and instructions can be separated because the operation of the compiler and its settings are known to separate data and instructions, it is possible to design a decompiler that will translate the input executable, program into an intermediate code representation that may subsequently be compiled to run on a processor supporting a different instruction sets. Cobol load modules compiled using a Cobol compiler are an example of such programs. To preserve interoperability with other programs that externally reference addresses of the original program, a load module compiler generates an index of addresses that may potentially be referenced from outside the program, and generates as output object code that incorporates 32-bit index locations in lieu of 64-bit addresses for those addresses. In operation, the runtime environment provides an exception handler to translate 32-bit index locations into the correct 64-bit memory addresses for the indexed locations. In one embodiment, the intermediate code representation generated by decompiling the load module is a file or set of files structured such that each instruction of the Cobol load module is represented by a macro in accordance with the rules of the C programming language. The intermediate code representation of the load module is then received by a load module compiler, executing in a legacy application environment (LAE) operating on an x86 platform that supports a 64-bit instruction set. A C compiler is invoked by the load module compiler to translate C macro instructions into 64-bit X86 instructions. The load module compiler incorporates the index into the output machine language program so that the external references to memory locations of the executable output program may be resolved. The load module compiler may also invoke a library of operating system functions to translate operating system function calls into native X86 instructions. The load module compiler converts the intermediate code representation into an X86 machine language program that is assembled into an executable file.

A load module compiler can be constructed to implement different instruction format, and to develop a different intermediate code representation before compiling the intermediate expression for the new target platform. Although an x86 target platform is described above, a different hardware architecture, such as ARM or other architecture may be used. Similarly, though a translation to a 64-bit address space is described above, other address spaces could be used. The decompiler of the load module compiler may be written to operate on the load module in multiple passes, or in a single pass. The load module may invoke known Binder APIs to obtain information about the Cobol load module used to decompile the module. Alternatively, information about the Cobol load module used to decompile it may be obtained from the load module itself. Information such as the exit lists, return codes, CSECT information, relocation dictionary entries, or external symbol directory entries may be otherwise be obtained to enable the decompilation of a load module. The load module compiler may include sets of scripted macros to process the intermediate code representation and index by invoking the compiler and library to generate x86 code. Alternatively, a compiled program may perform equivalent functions.

Java is an object-oriented programming language that was developed to facilitate the creation of programs that are targeted to run in a portable runtime environment called the JVM (JVM). While JVMs are written for a variety of different underlying hardware and operating system platforms, the intent of the JVM is to provide a portable runtime so that a Java program written for one runtime environment will operate in another. Due in part to the fact that it has been licensed under public licenses, adoption of Java has been widespread. Programs written in the java programming language for the JVM are compiled into an intermediate representation called Java bytecode, rather than to a native hardware-specific instruction set.

The JVM provides memory management features including the provision of a shared memory heap that is available to all threads running inside the JVM, and a private memory stack, assigned to an individual thread running in the JVM, whose memory is not accessible to programs running outside that thread. The JVM automates memory management processes, in part to simplify programming by removing responsibility for memory management from the Java application programmer. Programs running within a thread inside the JVM can create objects, and rely on the JVM's implicit memory allocation and deallocation processes to create space for such objects inside the stack. The allocation of per-thread stack space within the JVM is typically controlled by operating system settings in a default mode, but may be adjusted by dynamic settings that are set when the JVM is initialized.

The JVM includes a security manager object that may be adapted to defines a security policy for applications running in the JVM. By default, the security policy of the JVM is permissive, but policies may be implemented to identify certain actions to be unsafe, and, in the event of any actions disallowed by the security policy, cause the JVM to throw a SecurityException.

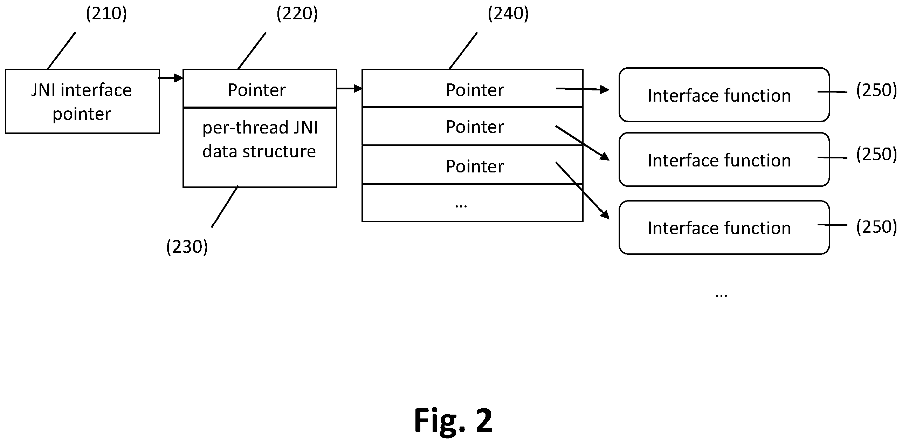

The Java native interface is a programming framework designed to allow programs written in the Java programming language and operating on a JVM to call, and to be called by programs running outside the JVM, that have been compiled to run natively on the host hardware and operating system. **FIG. 2** illustrates the JVM. Typically, the JNI is used to allow Java programs to access functionality not found in the Java class library, to make use of pre-existing libraries written in other languages, or to invoke assembler routines written to optimize performance of a Java application on a particular platform. Because the JVM uses different data representations than native environments, translation between data representations is an issue. Also, Java programs that invoke JNI methods to access resources outside the JVM are not portable in that they cannot execute properly in a JVM that is unable to access such external resources.

When a Java program calls a native method, the JNI provides the native method with the JNIEnv pointer, and a reference to the calling object or class, and any arguments or parameters required by the callee method. The JNIEnv pointer (210) includes a reference to a function table pointing to the available functions of the JNI interface, and is illustrated in **FIG. 2****.** The first argument (220) to JNIEnv is a pointer to a table of pointers (240), each of which indicates an interface function of the JNI. The second argument (230) is a reference to an object or class. JNI functions permit calling programs to interact with native C/C++ programs to obtain version information, operate on classes, respond to exceptions, references objects, data fields, obtaining object identifiers, perform calls, access data fields, perform string and array operations by translating between Java and C/C++ data types, register methods, monitor operations, and obtain the JVM interface pointer. Though the interface can be used to communicate with programs written in other languages, the JNI functions are not written to interact with a legacy mainframe environment, such as might be used in batch processing, CICS, IMS, VSAM. When a program running in the JVM invokes an external program using the JNI, it passes a JNIEnv pointer, a jobject pointer, and any Java arguments declared by the Java method. The env pointer is a structure that contains the interface to the JVM. It includes all of the functions necessary to interact with the JVM and to work with Java objects.

Typically, the JVM is instantiated and java programs initiated by passing a classpath, class name, and optionally a byte string comprising input parameters to the JVM over the command line, which passes the byte string to the main() subroutine of the class.

Application developers desiring to introduce the flexibility offered by Java programming to legacy Cobol systems can rewrite code using object oriented Cobol, a modified version of the Cobol programming language that introduces the ability to define classes, encapsulated objects, methods for classes and objects, inheritance, polymorphism and method overrides, and the ability to create and manage objects and to invoke methods on objects. Through the creation of COBOL proxy objects in the Object Cobol runtime environment, an Object Cobol Program can communicate with a Java Object. Also, objects in Object Cobol that have been compiled so as to inherit java interface classes, can be encapsulated in Java wrapper classes that enable them to be called from Java objects. However, migrating a legacy Cobol application to object oriented Cobol requires rewriting the code to take advantage of the new features, and recompiling the application.

Another approach to introducing Java into a legacy environment is to introduce a server and JVM inside a CICS region, and to allow CICS programs to communicate with Java programs inside the CICS region. A disadvantage of this approach is that it requires rewriting and recompiling the CICS programs to make them aware of the JVM. An additional issue with this approach is that the CICS environment does not permit the export of processes that are not deemed thread safe to JAVA, which further limits the ability to selectively replace older CICS programs with JAVA programs.

It would be desirable to provide an environment that permitted the selective replacement of portions of a legacy application, such as a legacy Cobol application, by replacing individual load modules, or individual executable programs within load modules, with Java programs that could run in a virtual machine, without requiring modification of other executable programs or load modules, either by re-writing or recompiling the legacy code. Such a system would significantly reduce the business risk associated with migrating an application to a new environment, since portions of the original code would be left intact, and would greatly facilitate the introduction of new features and capabilities that can readily be implemented in a newer platform, into a legacy application. In the case of CICS, it would also be advantageous to enable the replacement of older programs that were not written to be thread safe, into the JVM.

Scott Stricker, "Java programming with JNI", IBM Corporation, 26 March 2002, is a tutorial describing the basic and most commonly used techniques of the Java Native Interface: calling C or C++ code from Java programs, and calling Java code from C or C++ programs. The Java Native Interface (JNI) is a native programming interface that is part of the Java Software Development Kit (SDK). JNI lets Java code use code and code libraries written in other languages, such as C and C++. The Invocation API, which is part of JNI, can be used to embed a Java virtual machine (JVM) into native applications, thereby allowing programmers to call Java code from within native code.

Walter Falby, "The Java Native Interface on z/OS", z/Journal, December 1, 2010, describes working examples of Assembler-to-Java using the JNI. The programming examples show a z/OS assembler program calling into a C module that invokes Java methods. The glue code (the C module) runs on z/OS. The Java code runs under USS.

WO 2018/197928 A1 describes a scalable container-based system implemented in computer instructions stored in a non-transitory medium, the system comprising: a source code repository containing the source code of a monolithic legacy application containing a plurality of programs executable in a legacy computing environment to perform a plurality of transactions; a source code analyzer operable to identify transaction definition vectors identifying each program potentially called, an activity log analyzer identifying which programs are actually used by the monolithic legacy application; a microservice definition optimizer operable to remove unused programs from the transaction definition vectors and to create a plurality of microservice definition vectors defining a plurality of microservices; a microservice image builder operable to locate for each program identified by the microservice definition vectors compiled source code binaries compiled to run in the legacy computing environment to form a plurality of microservice images corresponding to the microservice definition vectors; and a container builder operable to form a container image for a set of microservices using corresponding microservice images and using image files from complementary emulator elements of the legacy emulator corresponding to functions or sets of functions employed by the set of microservices when executed, as identified by signatures of calls in the binaries in the microservice or set of microservices, to create a plurality of container images.

IBM Systems Reference Library, "IBM OS Linkage Editor and Loader", Tenth Edition, January 1972, describes the usage of the linkage editor and loader of the IBM System/360 Operating System to prepare the output of a language translator for execution, and describes the use of the linkage editor and loader for installing and maintaining the operating system.

The article "Technique to get the dependency information between Java EE and CICS COBOL programs in an integrated application server which can run both Java EE and CICS COBOL applications" disclosed anonymously in the IP.COM journal October 2013, describes a containerized COBOL program and Java program calling each other, making the COBOL program available as a service.

Didier Durand et al, "The Evolution of Mainframe Transactional Processing Through Containerization and the Cloud", White Paper, LzLabs, January 2018, describes LzLabs Software-Defined Mainframe (SDM) for re-hosting legacy mainframe applications and data, unchanged, on commodity machines (x86, ARM). The SDM eliminates the need to modify and recompile mainframe application source code and preserves mainframe data in its native encoding format.

### SUMMARY

There is provided a computer implemented method for executing an application comprising a first load module that calls a second load module for a source architecture on a machine having a target architecture and a system for performing the method, as defined in the independent claims, respectively. Preferred embodiments are set forth in the dependent claims.

### BRIEF DESCRIPTION OF THE DRAWINGS

For a more complete understanding of embodiments of the present invention and its features and advantages, reference is now made to the following description, taken in conjunction with the accompanying drawings, in which:
FIGURE 1a is a schematic diagram of a software application or program running on a legacy hardware and operating system platform, as is known in the field;
FIGURE 1b is a schematic diagram of a legacy application executing on a legacy application engine, with native APIs invoked to execute ENC instructions;
FIGURE 2 is a schematic diagram of the JNI interface pointer structure for pointing to JNI interface functions, as is known in the field;
FIGURE 3 is a schematic diagram of a legacy application executing on a legacy application engine, in which a binary interface between the legacy environment and the JVM resides in the LAE;
FIGURE 4 is a flow diagram depicting the process of constructing and loading a replacement module in the JVM or other environment;
FIGURE 5 depicts exemplary signature types associated via element A with FIG. 4; and
FIGURE 6 is a flow diagram depicting the instantiation and configuration of the JVM for use with a binary interface.

### DETAILED DESCRIPTION

The present invention, in at least one embodiment, provides a binary interface to enable legacy load modules, operating in a legacy environment, to interoperate with methods of Java classes, operating in a JVM, without requiring the rewriting or recompilation of the legacy source code and legacy load modules. In one embodiment, one or more programs, which may constitute one or more entire load modules or one or more individual program object files within a relocatable load module, are replaced with one or more Java methods, without modification of others of the executable program files or load modules that comprise the application. The LAE recognizes the replacement of the one or more executable programs with a corresponding Java method, and constructs a load module that invokes one or more ENC instructions, to invoke the Java method running in a JVM. "ENC" or "execute native command" instructions are instructions of the target platform that, rather than run in emulation, cause the runtime environment to execute a native API to replace the original instruction, call, subroutine, or program.

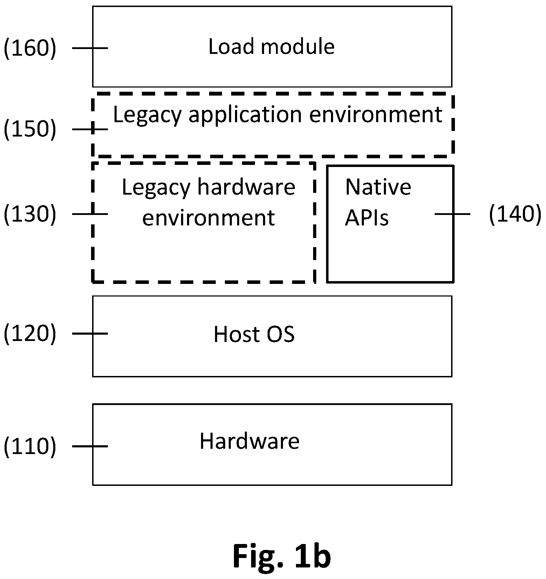

**FIG. 1b** depicts an emulation system designed to enable the operation of a legacy load module (160), which may, for example, be a relocatable Cobol load module configured to operate on a mainframe platform under the S/390 operating system, on a different, target platform. In the example shown, the target platform hardware comprises an x86 computer (110), and the target operating system (120) is Linux. Though the load modules and mechanisms for selectively replacing load modules (160) or executable programs within such load modules (160) with Java methods running in the JVM are described in the context of programs running in a LAE module (150) that operates as a container for the execution of legacy workloads on a different target platform, aspects of the inventive technique for enabling the selective replacement of legacy programs with Java could also be applied to the legacy environment itself, such as with the execution of program in a LAE running on a legacy platform.

One option for operating a load module compiled to operate in a legacy hardware and operating system environment in a different target environment is an emulation system, as depicted in **FIG. 1b****.** A load module (160), may instead be configured to execute in a LAE ("LAE") (150), which operates as a container and execution environment for the load module (160). Preferably, the load module (160) is processed to replace legacy system calls, and other instructions, with Execute Native Command ("ENC") calls that invoke native APIs (140), which are programs written to optimize performance in the target platform. In the example shown, the host OS (120) of the target platform is Linux, and the hardware platform (110) is an x86 computer system. Other operating systems, such as Windows, macOS, iOS, Android, or others could be used, and other hardware platforms, such as a blade server, ARM, RISC, or other computer platform could also be used. The load module (160), executing in the LAE (150), may invoke legacy hardware functions, which are provided by the legacy hardware environment module (130). In one embodiment, the legacy hardware environment module (130) comprises a set of functions, each corresponding to a hardware instruction, to provide emulated functions corresponding to the instruction set, such as a System/360, ESA/390, or z/Architecture mainframe instruction set. Alternatively, a selected subset of such instructions, or a hybrid support of instructions from more than one legacy hardware platform may be supported. In another embodiment, support for macro instructions or other API calls may also be included in the hardware environment module (130). Though one load module (160) is shown, multiple load modules comprising one or more applications may run in the LAE (150). Additionally, one or more legacy load modules (160) may be replaced with load module complied applications (not shown) which are generated as the output of a load module compiler. Such load module compiled applications may operate in the container and runtime environment provided by the LAE (150) but typically will not invoke functions of the legacy hardware environment (130), as they have been modified to invoke native hardware (110) functions directly. Alternatively, a LAE (150) may comprise a runtime environment running natively on a legacy platform, in which case the legacy hardware environment (130) and Native APIs (140) may be omitted.

An important function of the Memory Management Unit (MMU) is to prevent a process or task from executing instructions in memory that has not been allocated to that process or task. An attempt to execute instructions in memory that has not been allocated results in a hardware fault, which is intercepted by the operating system, often called a segmentation fault (SEGV), which causes generally termination of the process.

In an embodiment implemented on an x86 machine running an instance of the Linux operating system, the MMU of the processor responds to an attempt to access instructions at these lowest addresses that have not been allocated to the user space of the program and causes the Linux operating system to generate a SEGV signal that invokes an exception handler. In one embodiment, the exception handler is configured to access the index of 32-bit addresses, and to translate the 32-bit address into the corresponding 64-bit address used by the executable program. The exception handler may also be configured to perform additional verifications, such as to support protection key management of memory addresses. One may use the exception handler and prefixing schemes described in PCT application PCT/IB2015/059646 titled "Protection Key Management and Prefixing in Virtual Address Space Application."

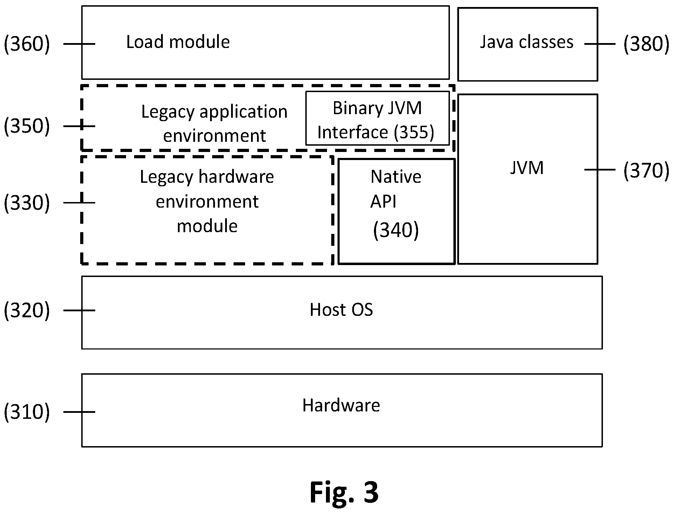

**FIG. 3** depicts the JVM running on a native hardware and operating system platform in the environment of **FIG. 1b****,** with the addition of an instance of the JVM (370), which is configured to operate Java classes (380) that have been written to replace either one or more load modules (260), or to replace one or more executable programs contained in the load modules (360). As shown in the figure, the load modules (360), operate in the LAE (350), and, in operation, may invoke legacy hardware functions provided by the legacy hardware environment module (330), or system and other calls invoked by ENC instructions, which call Native APIs (340). The exemplary system of **FIG. 3** runs on host OS (320), which is preferably Linux, and differs from the legacy operating system, such as S/390, of the legacy environment for which the legacy load module was intended to execute. Also, the exemplary system of **FIG. 3** operates on an x86 server platform, whose architecture and native instructions differ from the hardware platform on which the legacy load module was intended to execute. Also depicted in **FIG. 3** is the binary JVM interface (355) which permits programs of the legacy load module (360) or legacy compiled load module operating in the LAE (350), to make calls to or to respond to calls from Java code running in the JVM (370).

In one embodiment, the legacy hardware environment module (330), native APIs (340), LAE (350), binary JVM interface (355), and JVM (370), are deployed in a Docker container in a cloud-based deployment. The cloud-based deployment may allow for the provision of computer resources, such as server capacity and network storage, required by the system. Preferably, the native APIs (340) are implemented by compiling programs with switchable settings designed to optimize performance depending on whether they are compiled to execute on an x86 platform or ARM platform. In another embodiment, the stack is deployed on an x86 server hardware (310) and running under Linux as the host OS (320).

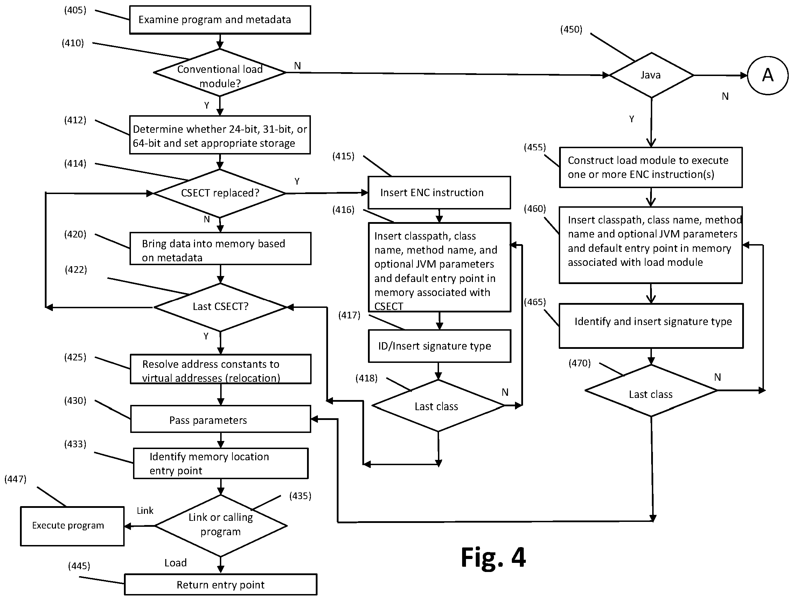

**FIG. 4** depicts the operation of aspects of a system, such as the system depicted in **FIG. 3****.** When a program operating in the LAE (350) is dependent on another load module, the system loader examines the program and its metadata, as depicted at step (405). In one embodiment, load modules whose executable program code has been replaced by Java include a two-byte identifier, indicating that the load module is a replacement of a legacy load module. Other types of identifier, or the use of a data structure or object that lies outside the load module, or other types of signaling to the loader of the modified status of a particular load module can also be employed. In step (410), the loader determines whether the load module is a conventional legacy module whose executable code has not been replaced with Java or other code. In the case of a conventional load module, the loader next determines whether it is intended to run in a 24-bit, 3 1-bit, or 64-bit address space step (412), and establishes appropriate storage to receive the load module. To allow for the possibility that an individual CSECT within a load module may have been replaced, in one embodiment the loader performs a table lookup to determine whether such a replacement has occurred at step (414). Next, if the CSECT has not been replaced, based on the metadata in the load module, the loader loads the program into memory (420). If the CSECT has been replaced, the loader will look up and insert the appropriate ENC instruction into the load module (415), insert the classpath, class, method name, and optional JVM parameters and optional entry point into memory associated with the CSECT, at step (416), then identify and insert the appropriate signature type at step (417). In the event that there are multiple Java programs that replace a single CSECT in the load module, entry points for each such program are preferably inserted to enable access at the respective entry points. Preferably, the classpath is provided as a uniform resource identifier (URI) which enables the class to reside at any address that is accessible to the JVM. Optionally, where a dedicated ENC instruction to the program replacement, the classpath, class name, method, and optional JVM parameters will be known to the native API invoked by the ENC instruction, and need not be inserted at step (416). If there are additional CSECTS in the load module, the loader proceeds to the next CSECT at step (422), and if the last CSECT has been brought into memory, performs relocation by resolving address constants to appropriate virtual addresses (425), and passes parameters to the load module (430). The memory location and entry point is then identified (433) so that it may be communicated to the calling program. At this point, in the case of a load, control is not passed to the load module, but its address (entry point) is returned in register zero at step (445). In the case of a link, program execution begins at step (447) as shown.

In the event that that the loader detects at step (410) that the load module is not a conventional load module, the loader checks the program metadata to indicate the replacement type. If the metadata indicates a Java replacement (450), then, in accordance with one embodiment, the loader constructs a new load module (455) within the LAE (350) that is configured to execute one or more ENC instructions. In one embodiment, each ENC instruction includes a parameter indicative of the legacy program that it has replaced, and a separate ENC instruction is used for each such program. In another embodiment, an array of parameters indicates replacement of programs. In constructing the load module, the loader first examines the program metadata, determines whether 24-bit, 31-bit, or 64-bit addressing applies, and establishes appropriate storage to insert the new load module. Then, at step (460), the loader inserts the classpath, class name, method name, and any optional JVM parameters associated with the load module in memory. In the case that multiple ENC instructions are used, a default entry point is set for the first class so that, in the event that the caller does not specify which ENC instruction should be invoked first, the correct sequence of instructions will be followed. Preferably, the classpath is provided as a uniform resource identifier (URI) which enables the class to reside at any address that is accessible to the JVM. Optionally, where a dedicated ENC instruction is assigned to a single program replacement, the classpath, class name, method, and optional JVM parameters will be known to the native API invoked by the ENC instruction, and need not be inserted at step (460) as part of the process of loading the replacement load module. In another embodiment, which is particularly suited to small programs that are frequently called, the replacement Java class is inserted inside the load module, and the classpath parameter indicates the internal location of the class.

Because a Java program that has replaced a legacy program, such as an executable Cobol program in the legacy load module, must be able to receive the parameters that would have been processed by the replaced Cobol program, and must return output in the format that is expected by the calling program, the inventive system examines the structure of the parameters to be passed from and returned to the calling program, and associates the parameters with a signature type. In one embodiment, and in the case of idiosyncratic structures of input and output parameters, the signature type is determined at the time that the replacement program is written. In another embodiment, the structure of the input and output parameters may vary with the caller program or may vary if the caller is an assembler, PL/1, Cobol, Java, or other program, and different signature types may be inserted in accordance with the caller. In another embodiment, rather than employ different signature types in the case of different caller programs or program environments, a different ENC instruction may be employed to handle the need for different input/output data formatting. Whichever the method of identifying the signature type, the loader inserts a signature type identifier into the memory associated with the load module at step (465). In the event that the replacement Java program had a dedicated ENC instruction, the identification of and insertion of the signature may be omitted at step (465) if they are provided as part of the native API invoked by the dedicated ENC instruction. At step (470), if there are more ENC instructions, the loader returns to step (460) for the subsequent class. The loader next passes the parameters of the Java replacement load module at step (430) as shown.

In accordance with one embodiment, the signatures are implemented as enumerated data types that correspond to typical patterns of input and output parameters for legacy applications. A common method for invoking a Java program from outside a virtual machine using the Java Native Interface (JNI) is to provide a single text string to communicate the byte-code input. Legacy program calls that take a single register argument (e.g. register 1) or return a single register value (e.g. register 15) have corresponding signatures. Signatures that presents a byte array of 16 bytes, or of 16 register settings are also common. In the case of CICS program calls, signatures that provide for multiple strings are typical.

In the event that a batch program is replaced, signatures ASV, ASI, SV, and SI will typically be used. The ASV signature is used where the input parameters are passed as a set of separate strings. The ASI signature is used where the input parameters are passed as a set of separate strings, and the return value is expected in register 15 of the legacy hardware for which the load module was originally created. The SV signature is used where the input parameter is passed as a single string. The SI parameter is used where the input parameter is passed as a single string, and the return value is expected in register 15 of the legacy hardware for which the load module was originally created. The ABV signature is used where the input parameter is passed as a byte array. The ABI signature is used where the input parameters are passed as a byte array and the return value is expected in register 15 of the legacy hardware for which the load module was originally created. The AIV signature is used where the input parameters are passed as an array of 16 integers containing the contents of legacy system registers R0..R15 on entry. The AII signature is used where the input parameters are passed as an array of 16 integers containing the contents of legacy system registers R0..R15 on entry, and the return value is expected in register 15 of the legacy hardware for which the load module was originally created. The IV signature is used where the input parameter contains the contents of legacy system register R1. The II signature is used where the input parameter contains the contents of legacy system register R1, and the return value is expected in register 15 of the legacy hardware for which the load module was originally created. The PIV signature is used where the input parameters comprise an integer array containing a standard parameter list on entry, for which the last parameter is high order bit terminated. The PII signature is used where the input parameters contain a standard parameter list on entry, the last parameter is high order bit terminated, and the return value is expected in register 15 of the legacy hardware for which the load module was originally created.

Traditionally, when a Cobol application, such as one written in Object Cobol, seeks to invoke a class using the JVM, it does so by instantiating the JVM, and providing the name of the class and a string argument through the command line interface. This arrangement is inflexible because it requires the COBOL application to be rewritten in Object Cobol, and because invoking a class using the public static method void main(String[]) limits invocation to the main() function of the specified class.

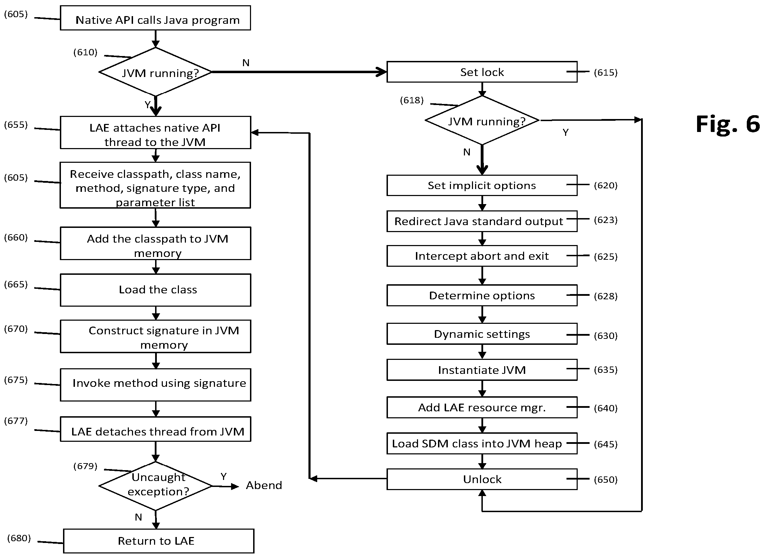

As shown in **FIG. 6****,** upon execution, the ENC instruction will invoke a Native API that calls the Java program. Next, the binary interface checks to see whether the JVM is running at step (610). If the JVM is not running, then the binary interface thread running on the LAE initiates an instance of the JVM by obtaining a process-wide lock (e.g. pthread mutex lock) on the instruction for initiating the JVM (615), then checking whether the JVM is running, at step (618), as it may have been started by another process before the lock was attained, setting implicit options (620), and redirecting the JVM's standard output (623) to the LAE log. Next, at step (625), the binary interface thread initiates an intercept of abort and exit by disabling the exit and halt operations in the security manager. Examples of implicit options (620) include settings relating to tracing, diagnostics, or performance-related of the environment. For example, in the case that the calling program is a CICS program running in trace mode, it would be desirable to configure the JVM to perform trace. Preferably the security manager is configured with extensions to check exist and halt methods, and to check permissions, prohibiting the loading of the JNI, and restricting program calls by programs other than the LAE SDM class. Next, at step (628), the binary interface thread identifies options, such as CICS specification, tracing, and logging settings, and then sets dynamic settings (630) such as the amount of memory, maximum stack size, garbage collection parameters accordingly. In the event that the system is deployed in a microservices container, memory allocation and stack size may be adjusted in a smaller configuration than in a more general server-based deployment. Once the settings are set, the binary interface thread instantiates the JVM (635), and initiates execution of the LAE resource manager (640) so that, when the LAE ceases execution, the LAE resource manager will terminate the JVM, clear and free memory previously assigned to the JVM, and release other resources associated with the JVM. Then, in step (645), the thread loads a class called LAE SDM class into the shared heap of the JVM so that it will be accessible to the threads running in the JVM.

In accordance with a preferred embodiment, the LAE SDM class loads the JNI interface, which is preferably implemented by the LAE SDM class as a set of private methods. As such, and in light of the operation of the security manager preventing any other process from separately loading the JNI, access to external programs generally, and to the memory and programs running in the LAE (350) is limited to the LAE SDM class itself. In this way, the LAE SDM class functions as an interface class, by limiting the methods available to Java programs running in the JVM to access resources of the SDM. In order to enable the execution of replacement programs, or to access memory, programs, or other resources of the LAE, the LAE SDM preferably implements public methods or function calls. Examples of such public function calls include calls to open, close, read, or write legacy data sets, to read or write logs, to execute CICS, IMS, Cobol, or PL/1 function, to attach additional threads, read legacy register contents, perform type conversions, activate or deactivate tracing of the legacy environment, manipulate the legacy environment, obtain legacy date/time data, perform legacy wait or post operations, or to obtain legacy system job ID data.

The LAE SDM class redirects the JVM's standard system out and system error calls to the SDM log, or to another SDM data set. The LAE SDM class also instantiates the Java security manager. By default, the JVM security manager is permissive. Before releasing control of the JVM upon completion of initialization, the LAE SDM class configures the security manager to prevent processes from calling halts or exits, and may be configured to restrict access to external functions, legacy data sets, and the ability to load other java classes. The security manager prevents the loading of other classes that could access the LAE (350) other than through the SDM's own methods.

The implementation of the JNI described above differs considerably from a standard JNI because its support of numerous legacy system functions, its methods of converting data formats, and its ability to interact with external memory controlled using protection keys, and to properly respond to legacy system errors in a manner that permits Java program running in the JVM to gracefully react to such errors is not found in a standard JNI.

In one embodiment, the JNI includes functions to write to the LAE log, initiate program calls to programs executing in the LAE obtain or release storage, open or close files, set or clear error settings, put or get strings, bytes, or other data to or from files in the LAE data types such as converting from zoned to packed, packet to zoned, integer to zoned, integer to packed, packed to integer, packed to zoned, ..... recite the functions of the JNI. Exemplary functions included in the JNI include:

| | |
|---|---|
| private static native void | lz_log(int level, String message); |
| private static native int | lz_wto(String message); |
| private static native int | lz_mlwto(String[] messages); |
| private static native int | LLE_pgmcall(String epname, int parm, int flags, int dcb, int lang, int type); |
| private static native int | LLE_syncall(int epa, int parm, int flags, int dcb, int lang, int type); |
| private static native int | LLE_storage_obtain(int size, int subpool, int flags); |
| private static native int | LLE_storage_release(int addr, int size, int subpool, int flags); |
| private static native long | lzfopen(String[] args, int lrecl); |
| private static native int | lzfclose(long file); |
| private static native int | lzfeof(long file); |
| private static native int | lzferror(long file); |
| private static native void | lzclearerr(long file); |
| private static native int | lzfputs(String str, long file); |
| private static native int | lzputs(String str); |
| private static native String | lzfgets(int len, long file); |
| private static native String | lzgets(int len); |
| private static native byte[] | lzfread(int len, long file); |
| private static native int | lzfwrite(byte[] v, int len, long file); |
| private static native byte[] | convert_zoned_to_packed(int packed_len, byte[] zoned, int zoned_len); |
| private static native byte[] | convert_packed_to_zoned(int zoned_len, byte[] packed, int packed_len); |
| private static native byte[] | convert_uint64_to_zoned(int zoned_len, long uint64); |
| private static native byte[] | convert_int64_to_zoned(int zoned_len, long int64); |
| private static native byte[] | convert_uint64_to_packed(int packed_len, long uint64); |
| private static native byte[] | convert_int64_to_packed(int packed_len, long int64); |
| private static native long | convert_zoned_to_uint64(byte[] zoned, int len); |
| private static native long | convert_zoned_to_int64(byte[] zoned, int len); |
| private static native long | convert_packed to uint64(byte[] packed, int len); |
| private static native long | convert_packed_to_int64(byte[] packed, int len); |
| private static native int | LAE_storage_obtain(int size, int subpool, int flags); |
| private static native int | LAE_storage_release(int addr, int size, int subpool, int flags); |
| private static native int | LAE_rfetch(int r); |
| private static native void | LAE_rstore(int r, int v); |
| private static native byte | LAE_vfetchb(int a); |
| private static native void | LAE_vstoreb(byte v, int a); |
| private static native short | LAE_vfetch2(int a); |
| private static native void | LAE_vstore2(short v, int a); |
| private static native int | LAE_vfetch4(int a); |
| private static native void | LAE_vstore4(int v, int a); |
| private static native byte[] | LAE_vfetchc(int a, int l); |
| private static native void | LAE_vstorec(byte[] v, int a, int 1); |

In accordance with one embodiment, functions that perform input or output such as lzfopen, lzfclose, the various string functions, read, write, fetch, and store functions take as arguments the data definition name, string mode, and legacy record format, in addition to data arguments. The string mode setting indicates whether the data is converted from EBCDIC to ASCII format, ASCII to EBCDIC format, and whether to convert between little endian and big endian format, or to leave the data in the format presented by the calling program. Alternatively, separate functions to perform such data format conversions may be separately implemented.

Embodiments of the JNI in accordance with the inventive system may include support for commands such as /TEST MFS, /TES MFS, /TEST MFS NODE LTEM,, /FORMAT, /DISPLAY, /START TRAN, /STA PROG, /STA DB, /STOP TRAN, /STO PROG, /STO DB, /DBRECOVERY, /DBR, /RESTART, /END in to enable the invocation of IMS operator commands. The JNI may database calls, such as CLSE, DEQ, GU, GHU, GUR, GN, GHN, GNP, GHNP, DLET, REPL, ISRT, FLD, POS, message calls, such as AUTH, GU, GN, ISRT, CHNG, CMD, GCMD, PURG, SETO, and service calls, such as PCB, CHKP, INIT, INQY, ICAL, GMSG, GSCD, ICMD, RCMD, JAVA, LOG. APSB, DPSB, ROLB, ROLL, ROLS, SETS, SETU, SNAP, STAT, SYNC, TERM, and XRST. Similarly, the JNI may include CICS command interfaces, including, for example, Abend support, APPC basic and mapped conversation calls, authentication, batch data interchange, BMS messaging, BIF, CICS business transaction services, channel commands, console support, diagnostic services (e.g. DUMP TRANSACTION, ENTER TRACENUM), Document services, Environmental Services (e.g. ADDRESS, ADDRESS SET, ASSIGN), Event processing, Exception support, File control services, Interval control services, Journaling, Monitoring, Named counter server commands, Program control commands (e.g. INVOKE APPLICATION, LINK, LOAD, RELEASE, RETURN, XCTL), Scheduling services, Security Services, Storage control (e.g. GETMAIN, FREEMAIN), SYNCPOINT and SYNCPOINT ROLLBACK, Task control services, Terminal control, Transient data, CICS Web support commands, and other CICS command interfaces. Similarly, the JNI may include commands corresponding to VSAM macro instructions, including"
int LAE_vsam_get(VADR rpladdr, REGS *regs);
int LAE_vsam_put(VADR rpladdr, REGS *regs);
int LAE_vsam_point(VADR rpladdr, REGS *regs);
int LAE_vsam_endreq(VADR rpladdr, REGS *regs);
int LAE_vsam_erase(VADR rpladdr, REGS *regs);
int LAE_vsam_idalkadd(VADR rpladdr, REGS *regs);

If the JVM is running, then the thread executing the native API of step (405) attaches itself to the JVM using the AttachCurrentThread() call at step (655). Using the AttachCurrentThread() call, a native thread can attach itself to the virtual machine and obtain a JNI interface pointer. Once attached, the native thread operates like a regular Java thread running within the native method, and remains attached until it calls DetachCurrentThread() to detach itself. Once attached, the native API thread receives the classpath, class name, method, signature type, and parameter list at step (657), and, it adds the classpath to the thread stack (660), and loads the class in step (665). Next, at step (670), the binary interface thread invokes a method of the SDM class to construct the appropriate signature in the thread stack, inserting the received parameters into the objects as required to enable the Java replacement method to access them as the legacy program would have done. Next, at step (675), the binary interface routine invokes the method specified in the input parameter list at step (605).

When the method completes execution, control returns to the native API program, which uses the signature to structure the output in the form required by the calling program.

The method need not be the main() routine of the class that implements the Java replacement program, because it is invoked by the LAE routine associated with the thread, rather than invoked from outside the JVM. The method operates on the signature that was constructed in step (670), which contains the parameters passed by the calling program. As discussed above, the calling program may be a load module constructed to run in a legacy platform, a legacy load module that has been adapted to run in the LAE (350), but has not been compiled or otherwise made aware that the callee program has been replaced with a Java program. The calling program may also be another Java program running in the JVM. Upon completion of execution of the method, control returns to the LAE native API, which uses the signature created in step 670 to format the output for the return. (670).

The Java programs running inside the JVM communicate with the LAE (350) by invoking methods in the SDM class. These communications may involve memory accesses, which are controlled by the protection key mechanism described in WO2017/103,651, which may produce memory exceptions when the wrong storage key is used, or other memory access error occurs. Similarly, the communications may involve accessing a legacy program, which may produce any of a myriad of exceptions that may arise due to program loading or execution. The binary JVM interface communicates exceptions arise in the LAE (350) to the Java program, as they may be handled by the Java program as part of its ordinary operation. Upon completion of execution by the Java program, control returns to the LAE thread, which uses the signature to structure output in the manner required by the calling program. Then, at step (677), the LAE detaches the thread from the JVM. In the case of exceptions not caught by the Java program, the exceptions may be thrown by the JVM's exception handler at step (679) producing an ABEND. OC4 memory exceptions are translated into Java illegal access exceptions. OC7 packed decimal error exceptions are translated to Java number format exceptions. Divide by zero exceptions are translated to Java arithmetic exceptions. Generic exceptions, such as would arise if a thread cannot be started, are translated into illegal state exceptions. Upon completion of execution of the called method, the binary interface invokes a method of the SDM class at step (680) to format output in accordance with the signature type, including making any required ASCII to EBCDIC and endianness conversions and, the SDM invokes private methods implementing the JNI, to return output to the calling program in the LAE.

In the case of a CICS application, the LAE (350) schedules both thread safe and non-thread safe jobs for execution. This is because, in legacy CICS, all applications ran in the same thread and were inherently serialized. When CICS began to allow multi-threaded operations, some programs were written to be thread safe, while others were not. Traditionally, CICS cannot permit a Java call to a process that is not thread safe. In the case of CICS programs that are not thread safe, the LAE (350), rather than the CICS application, sets a lock to ensure that two CICS applications that are not thread safe do not cause illegal resource contention or deadlocks. Because the scheduling of the CICS applications is controlled within the LAE (350), a CICS load module, or CICS program within a load module that is not thread safe may be replaced by a Java program, without risk that the operation of the replacement Java program inside the JVM will produce erroneous behavior.

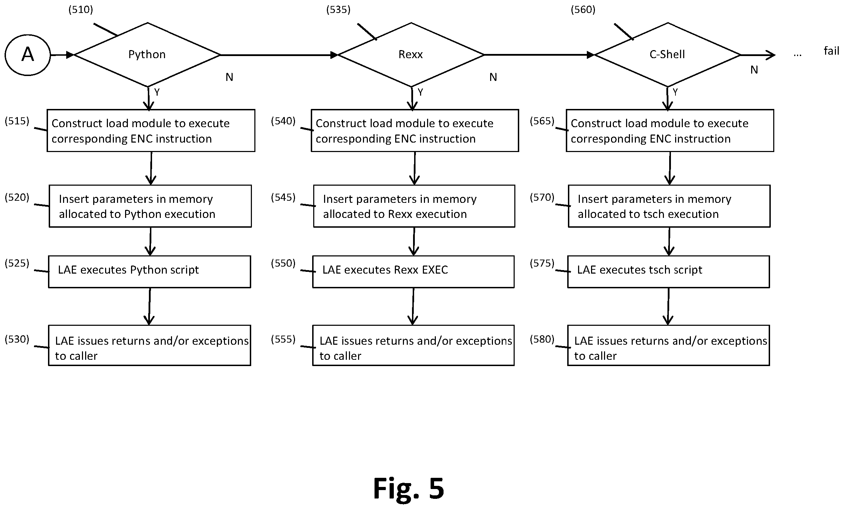

As shown in **FIG. 5****,** if the replaced load module is not Java, the loader checks to see whether it has been replaced with a Python script at step (510). In the event of a Python script, the loader constructs a load module to execute an ENC instruction corresponding to the execution of a Python script, places the input parameters in memory allocated to Python execution (520), and the LAE (350) executes the Python script at step (525). Upon completion, and/or in the event of an exception, the LAE issues the appropriate return and/or exception to the caller at step (530). If the replacement program is not a Python script, the loader checks to see whether the load module has been replaced by a Rexx EXEC at step (535), and if so, constructs a load module to execute the corresponding ENC, writes the parameters into memory allocated to Rexx execution (545), and executes the Rexx EXEC (550). Upon completion, and/or in the event of an exception, the LAE issues the appropriate return and/or exception to the caller at step (555). In the event the replacement program is not a Rexx EXEC, the loader checks to see whether the load module has been replaced by a C-Shell script at step (560), and if so, constructs a load module to execute the corresponding ENC (565), writes the parameters into memory allocated to tsch execution (570), and executes the tsch script (575). Upon completion, and/or in the event of an exception, the LAE issues the appropriate return and/or exception to the caller at step (580). The loader may be configured to similarly recognize that the legacy load module had been replaced by other interpreted or JIT compiled programs, and may construct a corresponding load module, configure memory with input parameters, execute the replacement program, and return results to the calling program. In some embodiments, the interpreted instructions of the Python, Rexx, C-shell/tsch, or other script may be inserted into the load module, and the corresponding interpreter pointed to script, rather than including the script in the native API that implements the ENC instruction.

Though not shown, a load module may be replaced my more than one Python, Rexx, or C-Shell or other script. In that case, the system will create one load module that includes multiple ENC instructions, and will iterate through the process of inserting the corresponding parameters in memory assigned to the execution of the corresponding script. As in the Java example, the system will either assign a default entry point of sequence the ENC instructions to establish an implicit default entry point for the replacement programs. In some embodiments, the same ENC instruction may be used to implement multiple Python, Rexx, or C-shell/tsch scripts, and provided an identifier as an argument to associate the corresponding script with the instruction. If the loader exhausts the available options, and does not find a corresponding replacement program for the load module, the loader returns and exception.

The computer readable instructions for implementing the LAE (350), the binary JVM interface (JVM), the legacy hardware environment module (330), the native APIs (340), the Java classes (380), the JVM (370), or other aspects, may be loaded from a hard disk drive, flexible disk, flash memory, optical disk, tape library, or other non-volatile storage medium, or from multiple such storage media. The hardware platform (310) or other hardware platform may comprise an x86, ARM, or other platform, and the host OS (320) may comprise Linux, Unix, Windows, or other operating system. The system may be deployed on a single computer, a network of computers, a networked cluster of computers, in a cloud deployment, or in a microservices deployment involving Docker or other container technology.

Instructions for carrying out the inventive system and methods described herein may be computer assembler instructions, instructions for a specific hardware architecture, machine instructions, microcode, firmware, and source or object code. Processes described in diagrams and flowcharts of this patent may be implemented by computer program instructions executing on computer hardware, which may be a general purpose computer, special purpose computer, or other data processing machine adapted to execute such instructions. The blocks or steps depicted in the diagrams may be implemented by program segments, functions, or modules. Program modules may include routines, program code, logic, data structures, objects, components that perform tasks when executing on various platforms.

The Java classes and objects discussed above may be implemented in other arrangements of classes, and may incorporate sub-classes and sub-sub-classes to inherit or override properties to achieve the behavior described herein. The discussion of Java objects in the JVM is understood to refer to computer program instructions and data, and references to the public or private methods of such objects or classes are understood to refer to portions of computer instructions in an object that execute in a computer platform, such as the JVM running on a computer platform. Other programming languages and virtual machine environments could be used with the inventive systems and methods described herein.

Elements may be installed on different platforms. which may be the exemplary x86 platform on which the systems described herein are installed. Alternatively the various parts of the system may distributed on multiple platforms. Where more than one platform is used to install and operate the different parts of the inventive system, the different platforms are coupled by way of a computer network, which may include wired, optical, or wireless local area networks, wide area networks, satellite or other telecommunications networks. In operation, the system may be loaded from a non-volatile storage medium such as a disk, tape, hard drive, flash memory drive, or other non-volatile storage medium, such that portions or all of the components of the system are simultaneously resident in the volatile memory of the one or more computers that make up the system.

## Claims

1. A computer implemented method for executing an application comprising a first load module (360) that calls a second load module (330) for a source architecture on a machine (310) having a target architecture, the source architecture being a mainframe architecture, the method comprising:
loading (420) by a loader, a first load module (360) comprising object code that calls a second load module (330) in a legacy application environment, LAE (350), the LAE (350) corresponding to a legacy mainframe environment executing on top of the target architecture;
detecting (414) by the loader that at least one CSECT in the second load module (330) has an associated replacement Java program, wherein said detecting (414) comprises:
determining that said second load module (330) has been replaced by inspecting metadata of said second load module (330), and
performing by said loader, a table lookup to determine whether an individual CSECT within said second load module (330) has been replaced;
inserting (416) into memory of the LAE (350) by the loader, a CSECT comprising an Execute Native Command, ENC, instruction corresponding to the replacement Java program;
identifying (417) a signature type indicative of the number and structure of input and output parameters of said replacement Java program, and inserting (417) a signature type identifier in said memory area for each said replacement Java program;
provisioning a java virtual machine, JVM (370) executing on the target platform;
executing (447), from said LAE (350) using a binary JVM interface (355), a native program associated with said ENC instruction, wherein the binary JVM interface (355) permits programs of the first load module (360) to make calls to or to respond to calls from Java code running in the JVM (370),
wherein said native program:
(a) attaches its thread to the JVM (370);
(b) adds a classpath of said replacement Java program and method name to the memory of the JVM (370);
(c) loads a replacement Java program class corresponding to the replacement Java program using the classpath in the JVM (370);
(d) constructs a signature comprising the input parameters structured according to said signature type and memory allocation appropriate to the output parameters of said signature type, in the memory of the JVM (370);
(e) invokes a method of said replacement Java program class corresponding to said method name; and
(f) detaches itself from said JVM (370).

2. The method of claim 1, wherein said replacement Java program comprises two or more Java programs, and wherein said loader writes a default entry point into said memory of the LAE (350).

3. The method of claim 1, wherein said loader inserts said classpath, and a class name into the memory of the LAE (350).

4. The method of claim 1, wherein said native program loads a binary JVM interface class into the heap of said JVM (370), wherein private methods of said binary JVM interface class implement a native interface to said LAE (350) and wherein public methods of the binary JVM interface class allow access to resources of the LAE (350) by invoking one or more of said private methods.

5. The method of claim 1, wherein said native program loads a binary JVM interface class into the heap of said JVM (370), wherein private methods of said binary JVM interface class implement a native interface to said LAE (350) and wherein public methods of the binary JVM interface class allow access to resources of the LAE (350) by invoking one or more of said private methods,
wherein preferably:
said replacement Java program class invokes a third load module in the LAE (350) by using a public method of said binary JVM interface class, which invokes one or more of its private methods to access resources of the LAE (350), and/or
said native program invokes a method of the binary JVM interface class to overwrite one or more memory areas of the JVM (370), and/or
said private methods of said binary JVM interface class include functions to write to an LAE log, initiate program calls to programs executing in the LAE (350) obtain or release storage, open or close files, set or clear error settings, put or get strings, bytes, or other data to or from files in the LAE data types, converting from zoned to packed, packet to zoned, integer to zoned, integer to packed, packed to integer, packed to zoned, ASCII to EBCDIC, EBCDIC to ASCII data formats.

6. The method of claim 5, wherein said provisioning further comprises setting a lock on the JVM start instruction, determining by said native program that the JVM (370) is not executing, initiating an LAE (350) resource manager, and, subsequent to loading said binary JVM interface class, releasing the lock.

7. The method of claim 5, wherein provisioning the JVM (370) comprises performing a first attempt at executing, determining that a memory error has occurred, then performing a second attempt at executing.

8. The method of claim 9,
wherein performing the first attempt at executing comprises using a first memory protection key and performing a second attempt at executing comprises using a second memory protection key, or
wherein performing the first attempt at executing comprises using a first address and performing a second attempt at executing comprises using a second address.

9. The method of claim 7, wherein, upon completion of the executing step, detecting an uncaught exception and terminating without providing an output of the executing step to the LAE (350).

10. The method of claim 1, further comprising configuring a security manager to prohibit halt and exit operations and to prohibit the loading of classes capable of interfacing with the LAE (350), wherein preferably said step of configuring a security manager is performed by a method of said binary JVM interface class.

11. The method of claim 1, wherein the LAE (350) comprises a binary interface and wherein, upon completion of execution of the invoked method of said replacement Java class to produce an output, the binary interface invokes a method of an SDM class to format the output according the signature type and returns the output to the LAE (350).

12. The method of claim 1, wherein the native program accesses memory controlled by a protection key established by the LAE (350).

13. A system comprising hardware (310), an operating system (320), and a LAE (350), the system operable to execute a first program compiled for a different hardware, operating system, or environment and to perform any method of Claims 1-12.

## Patentansprüche

1. Computer-implementiertes Verfahren zum Ausführen einer Anwendung, die ein erstes Lademodul (360) umfasst, das ein zweites Lademodul (330) für eine Quellenarchitektur auf einer Maschine (310) mit einer Zielarchitektur abruft, wobei die Quellenarchitektur eine Großrechnerarchitektur ist, wobei das Verfahren umfasst:
Laden (420), durch eine Ladeeinrichtung, eines ersten Lademoduls (360), das einen Objektcode umfasst, der ein zweites Lademodul (330) in einer Legacy-Anwendungsumgebung, LAE (350), abruft, wobei die LAE (350) einer Legacy-Großrechnerumgebung entspricht, die oberhalb der Zielarchitektur ausgeführt wird;
Erfassen (414), durch die Ladeeinrichtung, dass mindestens ein CSECT in dem zweiten Lademodul (330) ein assoziiertes Java-Ersatzprogramm aufweist, wobei das Erfassen (414) umfasst:
Bestimmen, dass das zweite Lademodul (330) durch Untersuchen von Metadaten des zweiten Lademoduls (330) ersetzt worden ist, und
Durchführen, durch die Ladeeinrichtung, eines Tabellensuchens zum Bestimmen, ob ein einzelner CSECT innerhalb des zweiten Lademoduls (330) ersetzt worden ist;
Einsetzen (416), in den Speicher der LAE (350) durch die Ladeeinrichtung, eines CSECT, der eine "Execute Native Command"-, ENC-, Anweisung entsprechend dem Java-Ersatzprogramm ausführt;
Identifizieren (417) eines Signaturtyps, der auf die Anzahl und die Struktur von Eingangs- und Ausgangsparametern des Java-Ersatzprogramms hinweist, und Einsetzen (417) einer Signaturtypkennung in den Speicherbereich für jedes Java-Ersatzprogramm;
Bereitstellen einer virtuellen Java-Maschine, JVM (370), die auf der Zielplattform ausgeführt wird;
Ausführen (447), von der LAE (350) unter Verwendung einer binären JVM-Schnittstelle (355), eines nativen Programms, das mit der ENC-Anweisung assoziiert ist, wobei die binäre JVM-Schnittstelle (355) Programmen des ersten Lademoduls (360) ermöglicht, Abrufe von dem Javacode, der in der JVM (370) läuft, durchzuführen oder auf Abrufe von dem Javacode, der in der JVM (370) läuft, zu antworten.
wobei das native Programm:
(a) dessen Thread an die JVM (370) anhängt;
(b) dem Speicher der JVM (370) einen Klassenpfad des Java-Ersatzprogramms und eine Verfahrensbezeichnung hinzufügt;
(c) eine Java-Ersatzprogrammklasse, die dem Java-Ersatzprogramm entspricht, unter Verwendung des Klassenpfads in die JVM (370) lädt;
(d) eine Signatur, welche die Eingangsparameter, die gemäß dem Signaturtyp strukturiert sind, und eine Speicherverteilung, die für die Ausgangsparameter des Signaturtyps geeignet ist, in dem Speicher der JVM (370) konstruiert;
(e) ein Verfahren der Java-Ersatzprogrammklasse, das der Verfahrensbezeichnung entspricht, aufruft; und
(f) sich selbst von der JVM (370) trennt.

2. Verfahren nach Anspruch 1, wobei das Java-Ersatzprogramm zwei oder mehr Javaprogramme umfasst und wobei die Ladeeinrichtung einen Standardeintrittspunkt in den Speicher der LAE (350) schreibt.

3. Verfahren nach Anspruch 1, wobei die Ladeeinrichtung den Klassenpfad und eine Klassenbezeichnung in den Speicher der LAE (350) einbringt.

4. Verfahren nach Anspruch 1, wobei das native Programm eine binäre JVM-Schnittstellenklasse in den Heap der JVM (370) lädt, wobei private Verfahren der binären JVM-Schnittstellenklasse eine native Schnittstelle für die LAE (350) implementieren und wobei öffentliche Verfahren der binären JVM-Schnittstellenklasse einen Zugang zu Ressourcen der LAE (350) durch Aufrufen von einem oder mehreren der privaten Verfahren ermöglichen.

5. Verfahren nach Anspruch 1, wobei das native Programm eine binäre JVM-Schnittstellenklasse in den Heap der JVM (370) lädt, wobei private Verfahren der binären JVM-Schnittstellenklasse eine native Schnittstelle für die LAE (350) implementieren und wobei öffentliche Verfahren der binären JVM-Schnittstellenklasse einen Zugang zu Ressourcen der LAE (350) durch Aufrufen von einem oder mehreren der privaten Verfahren ermöglichen,
wobei vorzugsweise:
die Java-Ersatzprogrammklasse ein drittes Lademodul in der LAE (350) unter Verwendung eines öffentlichen Verfahrens der binären JVM-Schnittstellenklasse aufruft, wodurch eines oder mehrere von deren privaten Verfahren zum Zugreifen auf Ressourcen der LAE (350) aufgerufen wird/werden, und/oder
das native Programm ein Verfahren der binären JVM-Schnittstellenklasse zum Überschreiben eines Speicherbereichs oder mehrerer Speicherbereiche der JVM (370) aufruft, und/oder
die privaten Verfahren der binären JVM-Schnittstellenklasse Funktionen zum Schreiben zu einem LAE-Protokoll, zum Initiieren von Programmabrufen für Programme, die in der LAE (350) ausgeführt werden, Erhalten oder Freigeben von Speicher, Öffnen oder Schließen von Dateien, Setzen oder Löschen von Fehlereinstellungen, Erstellen oder Aufrufen von Zeichenketten, Bytes oder anderen Daten zu oder von Dateien in den LAE-Datentypen, Umwandeln von zonalen zu gepackten, gepackten zu zonalen, ganze Zahl- zu zonalen, ganze Zahl- zu gepackten, gepackten zu ganze Zahl-, gepackten zu zonalen, ASCII- zu EBCDIC-, EBCDIC- zu ASCII-Datenformaten umfassen.

6. Verfahren nach Anspruch 5, wobei das Bereitstellen ferner das Einstellen einer Sperre auf der JVM-Startanweisung, Bestimmen, durch das native Programm, dass die JVM (370) nicht ausgeführt wird, Initiieren eines LAE (350)-Ressourcenmanagers und nach dem Laden der binären JVM-Schnittstellenklasse Freigeben der Sperre umfasst.

7. Verfahren nach Anspruch 5, wobei das Bereitstellen der JVM (370) das Durchführen eines ersten Ausführungsversuchs, das Bestimmen, dass ein Speicherfehler aufgetreten ist, dann das Durchführen eines zweiten Ausführungsversuchs umfasst.

8. Verfahren nach Anspruch 9,
wobei das Durchführen des ersten Ausführungsversuchs die Verwendung eines ersten Speicherschutzschlüssels umfasst und das Durchführen eines zweiten Ausführungsversuchs die Verwendung eines zweiten Speicherschutzschlüssels umfasst, oder
wobei das Durchführen des ersten Ausführungsversuchs die Verwendung einer ersten Adresse umfasst und das Durchführen eines zweiten Ausführungsversuchs die Verwendung einer zweiten Adresse umfasst.

9. Verfahren nach Anspruch 7, wobei nach dem Abschluss des Ausführungsschritts eine nicht festgestellte Ausnahme erfasst wird und ein Beenden ohne Bereitstellen einer Ausgabe des Ausführungsschritts zu der LAE (350) durchgeführt wird.

10. Verfahren nach Anspruch 1, das ferner das Konfigurieren eines Sicherheitsmanagers zum Verhindern von Stop- und Verlassen-Vorgängen und zum Verhindern des Ladens von Klassen, die mit der LAE (350) koppeln können, umfasst, wobei der Schritt des Konfigurierens eines Sicherheitsmanagers vorzugsweise durch ein Verfahren der binären JVM-Schnittstellenklasse durchgeführt wird.

11. Verfahren nach Anspruch 1, wobei der LAE (350) eine binäre Schnittstelle umfasst und wobei, nach dem Abschluss der Ausführung des aufgerufenen Verfahrens der Java-Ersatzklasse zum Erzeugen einer Ausgabe, die binäre Schnittstelle ein Verfahren einer SDM-Klasse zum Formatieren der Ausgabe gemäß dem Signaturtyp aufruft und die Ausgabe zu der LAE (350) zurückführt.

12. Verfahren nach Anspruch 1, wobei das native Programm auf den Speicher zugreift, der durch einen Schutzschlüssel kontrolliert wird, der durch die LAE (350) erstellt wird.

13. System, das Hardware (310), ein Betriebssystem (320) und eine LAE (350) umfasst, wobei das System zum Ausführen eines ersten Programms, das für eine andere Hardware, ein anderes Betriebssystem oder eine andere Umgebung kompiliert ist, und zum Durchführen von jedwedem Verfahren der Ansprüche 1-12 betrieben werden kann.

## Revendications

1. Un procédé mis en oeuvre informatiquement pour exécuter une application comprenant un premier module de chargement (360) qui appelle un deuxième module de chargement (330) pour une architecture source sur une machine (310) présentant une architecture cible, l'architecture source étant une architecture mainframe, le procédé comprenant le fait de :
charger (420) par un chargeur, un premier module de chargement (360) comprenant un code objet qui appelle un deuxième module de chargement (330) dans un environnement d'application hérité (*legacy application environment -* LAE) (350), le LAE (350) correspondant à un environnement mainframe hérité s'exécutant au-dessus de (*on top of*) l'architecture cible ;
détecter (414), par le chargeur, qu'au moins un CSECT dans le deuxième module de chargement (330) présente un programme Java de remplacement associé, sachant que ladite détection (414) comprend le fait de :
déterminer que ledit deuxième module de chargement (330) a été remplacé en inspectant les métadonnées dudit deuxième module de chargement (330), et de
réaliser, par ledit chargeur, une recherche dans une table pour déterminer si un CSECT individuel dans ledit deuxième module de chargement (330) a été remplacé :
insérer (416), dans la mémoire du LAE (350) par le chargeur, un CSECT comprenant une instruction *Execute Native Command* (ENC), correspondant au programme Java de remplacement ;
identifier (417) un type de signature indiquant le nombre et la structure de paramètres d'entrée et de sortie dudit programme Java de remplacement, et insérer (417) un identifiant de type de signature dans ladite zone de mémoire pour chaque dit programme Java de remplacement ;
provisionner une machine virtuelle java (*java virtual machine* - JVM) (370) s'exécutant sur la plate-forme cible ;
exécuter (447), à partir dudit LAE (350) à l'aide d'une interface JVM binaire (355), un programme natif associé à ladite instruction ENC, sachant que l'interface JVM binaire (355) permet aux programmes du premier module de chargement (360) d'appeler ou de répondre aux appels du code Java s'exécutant dans la JVM,
sachant que ledit programme natif :
(a) attache son *thread* à la JVM (370) :
(b) ajoute un *classpath* dudit programme Java de remplacement et un nom de méthode à la mémoire de la JVM (370) ;
(c) charge une classe de programme Java de remplacement correspondant au programme Java de remplacement en utilisant le *classpath* dans la JVM (370) :
(d) construit une signature comprenant les paramètres d'entrée structurés selon ledit type de signature et l'allocation de mémoire appropriés aux paramètres de sortie dudit type de signature, dans la mémoire de la JVM (370) ;
(e) invoque une méthode de ladite classe de programme Java de remplacement correspondant audit nom de méthode ; et
(f) se détache de ladite JVM (370).

2. Le procédé d'après la revendication 1, sachant que ledit programme Java de remplacement comprend deux programmes Java ou plus, et sachant que ledit chargeur écrit un point d'entrée par défaut dans ladite mémoire du LAE (350).

3. Le procédé d'après la revendication 1, sachant que ledit chargeur insère ledit *classpath,* et un nom de classe dans la mémoire du LAE (350).

4. Le procédé d'après la revendication 1, sachant que ledit programme natif charge une classe d'interface JVM binaire dans le tas (*heap*) de ladite JVM (370), sachant que les méthodes privées de ladite classe d'interface JVM binaire implémentent une interface native vers ledit LAE (350), et sachant que les méthodes publiques de la classe d'interface JVM binaire permettent d'accéder aux ressources du LAE (350) en invoquant une ou plusieurs desdites méthodes privées.

5. Le procédé d'après la revendication 1, sachant que ledit programme natif charge une classe d'interface JVM binaire dans le tas de ladite JVM (370), sachant que les méthodes privées de ladite classe d'interface JVM binaire implémentent une interface native vers ledit LAE (350), et sachant que les méthodes publiques de la classe d'interface JVM binaire permettent d'accéder aux ressources du LAE (350) en invoquant une ou plusieurs desdites méthodes privées,
sachant que de préférence :
ladite classe de programme Java de remplacement invoque un troisième module de chargement dans le LAE (350) en utilisant une méthode publique de ladite classe d'interface JVM binaire, qui invoque une ou plusieurs de ses méthodes privées pour accéder aux ressources du LAE (350), et/ou
ledit programme natif invoque une méthode de la classe d'interface JVM binaire pour écraser une ou plusieurs zones de mémoire de la JVM (370), et/ou
lesdites méthodes privées de ladite classe d'interface JVM binaire incluent des fonctions pour écrire dans un journal du LAE, lancer des appels de programme aux programmes s'exécutant dans le LAE (350), obtenir ou libérer de la mémoire, ouvrir ou fermer des fichiers, définir ou effacer des paramètres d'erreur, mettre ou obtenir des chaînes, des octets ou d'autres données vers ou depuis des fichiers dans les types de données LAE, convertir des formats de données zonés à empaquetés, empaquetés à zonés, entiers à zonés, entiers à empaquetés, empaquetés à entiers, empaquetés à zonés, ASCII à EBCDIC, EBCDIC à ASCII.

6. Le procédé d'après la revendication 5, sachant que ledit provisionnement comprend en outre la mise en place d'un verrou (*lock*) sur l'instruction de démarrage de la JVM, la détermination par ledit programme natif que la JVM (370) n'est pas en cours d'exécution, l'initiation d'un gestionnaire de ressources LAE (350), et, après le chargement de ladite classe d'interface JVM binaire, la libération du verrou.

7. Le procédé d'après la revendication 5, sachant que le provisionnement de la JVM (370) comprend l'exécution d'une première tentative d'exécution, la détermination qu'une erreur de mémoire s'est produite, puis l'exécution d'une deuxième tentative d'exécution.

8. Le procédé d'après la revendication 9,
sachant que l'exécution de la première tentative d'exécution comprend l'utilisation d'une première clé de protection de mémoire et que l'exécution d'une deuxième tentative d'exécution comprend l'utilisation d'une deuxième clé de protection de mémoire, ou
sachant que l'exécution de la première tentative d'exécution comprend l'utilisation d'une première adresse et que l'exécution d'une deuxième tentative d'exécution comprend l'utilisation d'une deuxième adresse.

9. Le procédé d'après la revendication 7, sachant que, au terme de l'étape d'exécution, une exception non capturée (*uncaught*) est détectée, et terminer sans fournir une sortie de l'étape d'exécution au LAE (350).

10. Le procédé d'après la revendication 1, comprenant en outre la configuration d'un gestionnaire de sécurité pour interdire des opérations d'arrêt et de sortie et pour interdire le chargement de classes capables d'interfacer avec le LAE (350), sachant que de préférence ladite étape de configuration d'un gestionnaire de sécurité est effectuée par une méthode de ladite classe d'interface JVM binaire.

11. Le procédé d'après la revendication 1, sachant que le LAE (350) comprend une interface binaire et sachant que, à la fin de l'exécution du procédé invoqué de ladite classe Java de remplacement pour produire une sortie, l'interface binaire invoque une méthode d'une classe SDM pour formater la sortie selon le type de signature et renvoie la sortie au LAE (350).

12. Le procédé d'après la revendication 1, sachant que le programme natif accède à la mémoire contrôlée par une clé de protection établie par le LAE (350).

13. Un système comprenant un matériel (310), un système d'exploitation (320) et un LAE (350), le système servant à exécuter un premier programme compilé pour un matériel, un système d'exploitation ou un environnement différents et à exécuter n'importe quel procédé d'après les revendications de 1 à 12.
